**Europäisches Patentamt**

**European Patent Office**

**Office européen des brevets**

(19)

(11) Veröffentlichungsnummer : **0 096 257**
**B1**

(12)

# EUROPÄISCHE PATENTSCHRIFT

(45) Veröffentlichungstag der Patentschrift :
30.11.88

(21) Anmeldenummer : 83104944.0

(22) Anmeldetag : 19.05.83

(51) Int. Cl.⁴ : **B 01 J 33/00**, B 01 J 19/00,
C 02 F  1/70, C 02 F  1/72,
C 22 B  3/00

(54) Vorrichtung zur Oxidation oder Reduktion von oxidierbaren oder reduzierbaren Stoffen in wässriger Lösung.

(30) Priorität : 05.06.82 DE 3221315

(43) Veröffentlichungstag der Anmeldung :
21.12.83 Patentblatt 83/51

(45) Bekanntmachung des Hinweises auf die Patenterteilung : 30.11.88 Patentblatt 88/48

(84) Benannte Vertragsstaaten :
AT BE CH FR GB IT LI NL

(56) Entgegenhaltungen :
WO-A-81 /011 59
DE-A- 2 151 572
DE-A- 3 023 703
FR-A- 1 089 845
FR-A- 2 195 478
US-A- 3 392 059
US-A- 3 957 506

(73) Patentinhaber : Kernforschungsanlage Jülich Gesellschaft mit beschränkter Haftung
Postfach 1913
D-5170 Jülich 1 (DE)
CH FR GB IT LI NL
Kastening, Bertel, Prof. Dr.
Lofotenstrasse 21
D-2000 Hamburg 73 (DE)
BE AT

(72) Erfinder : Divisek, Jiri, Dr..
Gutenbergstrasse 34
D-5170 Jülich (DE)
Erfinder : Fürst, Leander
Gutenbergstrasse 22
D-5170 Jülich (DE)
Erfinder : Kastening, Bertel, Prof., Dr.
Lofotenstrasse 21
D-2000 Hamburg 73 (DE)
Erfinder : Luft, Harald
In den Domänen 1
D-5162 Niederzier (DE)

## Beschreibung

Die Erfindung bezieht sich auf eine Vorrichtung zur Reduktion oder Oxidation von reduzierbaren oder oxidierbaren Stoffen in einer wässrigen Lösung mit einer gasförmige Reduktions- oder Oxidationsmittel in die Lösung einführenden Zuleitung. Die Mündung der Zuleitung im mit Lösung gefüllten Behälter ist von einer feinporigen, einen elektrochemisch wirksamen Katalysator enthaltenden Katalysatorschicht abgeschlossen, die für das Reduktionsmittel oder das Oxidationsmittel durchlässig ist.

Es ist bekannt, Schadstoffe in wässriger Lösung durch Oxidation oder Reduktion zu beseitigen oder Metalle aus solcher Lösung durch Reduktion der Metallionen zurückzugewinnen. Solche Verfahren dienen beispielsweise zur Reinigung von Abwässern, deren Schadstoffgehalt wegen der toxischen Wirkung der in ihnen enthaltenen Schadstoffe auf niedrige Werte zu begrenzen ist, oder zur Rückgewinnung wertvoller Metalle zwecks Wiederverwendung. Die Entgiftung zyanidhaltiger oder sulfithaltiger Lösungen mittels Sauerstoff an Aktivkohle als Katalysator oder von als Katalysator eingesetztem Elektrodenmaterial aus Brennstoffzellen wird in DE-PS 27 14 075 und DE-PS 27 13 991 beschrieben. Eine katalytische Reduktion von Chromat mit Wasserstoffgas ist in DE-PS 27 14 074 angegeben. Aus DE-PS 27 17 368 ist ein Reduktionsverfahren zum Abscheiden von Metallen aus Metallionen enthaltenden wässrigen Lösungen durch Wasserstoffgas bekannt. Als Katalysatoren werden in den beiden zuletzt genannten Fällen Materialien eingesetzt, die für die elektrochemische Oxidation von Wasserstoff geeignet sind.

In DE-OS 30 23 703 wird eine den Katalysator enthaltende feinporige Katalysatorschicht auf einem Trägerkörper aus porösem Material beschrieben. Der Trägerkörper und die Katalysatorschicht sind gasdurchlässig, Oxidations- oder Reduktionsmittel treten gleichmäßig verteilt durch die Schicht in die Lösung ein. Die gleichmäßige Durchgasung der feinporigen Katalysatorschicht führt zu ausreichendem Umsatz und hoher Ausbeute auch bei Lösungen, die Schwebstoffe oder andere von der Lösung mitgeführte feine Verunreinigungen enthalten. Die Katalysatorschicht ist auf die der Lösung zugewandte Fläche des porösen Trägerkörpers aufgebracht. Als Trägerkörper dienen vorzugsweise Platten aus porösem Graphit oder Hohlkörper aus porösem Kohlenstoff.

Nachteile stellen sich bei Durchführung der Oxidations- oder Reduktionsverfahren mit Trägerkörpern, die eine Katalysatorschicht der genannten Art aufweisen, dann ein, wenn die auf der Katalysatorschicht abgeschiedenen Metalle zu ihrer Rückgewinnung von der Schicht wieder abgelöst werden sollen und dieser Zyklus mit einem Katalysator mehrfach wiederholt wird, weil sich dann die Katalysatorschicht im Laufe der Zeit vom Trägerkörper ablöst. Auch durch abrasiv wirkendes Material in der zu behandelnden Lösung wird die Katalysatorschicht beschädigt und schließlich abgetragen.

Aufgabe der Erfindung ist es, eine Vorrichtung zu schaffen, bei der die den Katalysator enthaltende Schicht auch bei wiederholter Abscheidung und Wiedergewinnung von Metall erhalten bleibt und bei der zugleich eine Zerstörung durch abrasiv wirkendes Material in der Lösung vermieden wird.

Diese Aufgabe wird gemäß der Erfindung durch die im Patentanspruch 1 angegebenen Merkmale gelöst. Die Katalysatorschicht wird auf ihrer der Lösung zugewandten Seite mit einem für die Lösung und das gasförmige Oxidations- oder Reduktionsmittel durchlässigen Schutzkörper aus elektrisch leitendem Material bedeckt. In vorteilhafter Weise werden an diesem Schutzkörper die in der Lösung enthaltenen zu oxidierenden oder reduzierenden Stoffe umgesetzt. So findet beispielsweise im Falle der Metallabscheidung die Oxidation von Wasserstoff in der porösen Katalysatorschicht, die Reduktion der Metallionen auf der der Lösung zugewandten Fläche des elektrisch leitenden Schutzkörpers statt. Bei zu oxidierenden Stoffen wird die durch die Katalysatorschicht in die Lösung eingeführte Luft in der Katalysatorschicht reduziert, der Schutzkörper wird für die Oxidation der Stoffe wirksam.

Überraschend hat sich ergeben, daß eine örtliche Trennung der chemischen Reaktionen bei elektrisch leitender Verbindung zwischen Katalysatorschicht und Schutzkörper keine nachteilige Wirkung auf den Reaktionsablauf hat.

Vorteilhaft ist ferner, daß der metallische Schutzkörper der empfindlichen Katalysatorschicht zugleich mechanische Stabilität verleiht, so daß auf einen besonderen Trägerkörper in vielen Fällen verzichtet werden kann. Zweckmäßig wird ein mit der Katalysatorschicht beschichteter Schutzkörper aus elektrisch leitendem Material verwendet. Bevorzugt eignen sich Metalldrahtnetze, wie sie in Patentanspruch 2 angegeben sind. Solche beschichteten Schutzkörper sind gegenüber den bisher zur Durchführung der Verfahren eingesetzten beschichteten Trägerkörpern aus poröser Kohle (Filterkerzen bzw. Filterzylinder) oder porösem Graphit (Platten) berechnet auf den Quadratmeter wirksamer Außenfläche wesentlich wirtschaftlicher. Wegen der hohen mechanischen Stabilität metallischer Schutzkörper gegenüber Trägerkörpern aus poröser Kohle oder porösem Graphit lassen sich die Katalysatoren auch raumsparend ausführen. So beträgt die Dicke poröser Graphitplatten hinreichender Stabilität im allgemeinen 30 mm, nur bei kleinen Flächenabmessungen sind Plattendicken von minimal 20 mm verwendbar. Werden dagegen beschichtete Metalldrahtnetze verwendet, so läßt sich die vom Oxidations- oder Reduktionsmittel zu durchströmende Katalysatorschicht bei ausreichender mechanischer Stabilität auf eine Stärke verringern, die maximal 8 mm beträgt. Die Verwendung von Metalldrahtnetzen führt wegen ihrer Struktur auch zu einer deutlich größeren Reaktionsfläche. Dies steigert die Umsatzgeschwindigkeit gegenüber den bisher bekannten Trägerkörpern mit Katalysatorbeschichtung, solange die Struktur nicht durch beispielsweise sich abscheidendes Metall verändert wird und zusammenhängende Metallschichten entstehen.

Bevorzugt werden Metalldrahtnetze aus Edelstahl eingesetzt, Patentanspruch 3. Dies nicht nur wegen ihrer Beständigkeit bei chemisch aggressiven Lösungsbestandteilen, sondern vor allem weil auf Edelstahlnetzen sich abscheidendes Metall mangels fester Haftung leicht abbröckelt und zum Boden des die Lösung enthaltenden Behälters fällt, wo es gesammelt und abgeführt werden kann. Bei der Abscheidung von Metall unmittelbar auf der Katalysatorschicht ist dies nicht der Fall. Vielmehr besteht hier die Gefahr, daß sich das abgeschiedene Metall zusammen mit der kostbaren Katalysatorschicht ablöst.

Als für Lösung und Gas durchlässige elektrisch leitende Schutzkörper eignen sich neben Metalldrahtnetzen siebartige Metallkörper oder feine Lochplatten oder mit Ausnehmungen versehene Metallfolien. Als Material kommt auch Streckmetall in Betracht. Das feste Metallmaschenwerk des Streckmetalls, das durch Stanzen und nachträgliches Auseinanderziehen aus Stahlblech hergestellt und beispielsweise als Putzträger verwendet wird, bildet einen mit Katalysator gut beschichtbaren Schutzkörper. Statt solcher Metallteile eignen sich auch für Lösung und Gas durchlässige poröse Sintermetallplatten, Patentanspruch 4.

Um die Umsatzgeschwindigkeit noch zu erhöhen, ist es nach Patentanspruch 5 vorgesehen, die der Lösung zugewandte Fläche des Schutzkörpers mit elektrisch leitenden, oberflächenreichen Körpern elektrisch leitend in Berührung zu bringen, die zumindest im Bereich des Schutzkörpers in der zu behandelnden Lösung verteilt sind. Als Körper dieser Art eignen sich beispielsweise eine Schüttung von Metallspänen oder eine oder mehrere Lagen gefalteten Metallnetzes oder Metallwolle, an denen der Umsatz der aus der wässrigen Lösung zu entfernenden Stoffe erfolgen kann.

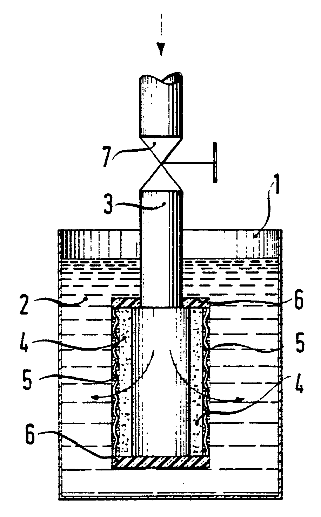

Nachfolgend sind Ausführungsbeispiele für die Erfindung angegeben. In der Zeichnung ist eine Vorrichtung schematisch dargestellt. Ausführungsbeispiel 1 vergleicht die erfindungsgemäße Vorrichtung mit bisher bekannten Katalysatorträgern.

Die Zeichnung zeigt einen Behälter 1 für eine zu behandelnde Lösung 2. In den Behälter 1 mündet eine Zuleitung 3 für Reaktionsgas, ein Oxidations- oder Reduktionsmittel. Die Mündung der Zuleitung 3 ist durch eine Katalysatorschicht 4 abgeschlossen, die für das Reaktionsgas durchlässig ist. Das Reaktionsgas wird unter Druck in die Katalysatorschicht 4 und die Lösung 2 eingeführt. Auf der der Lösung zugewandten Seite der Katalysatorschicht befindet sich ein Schutzkörper 5 aus elektrisch leitendem Material. Der Schutzkörper 5 ist mit der Katalysatorschicht 4 elektrisch leitend verbunden. Er ist so strukturiert, daß ihn sowohl die zu behandelnde Lösung als auch das Reaktorgas durchdringen können. Im Ausführungsbeispiel besteht der Schutzkörper 5 aus einem Metalldrahtnetz. Es wurde ein Edelstahldrahtnetz aus V2A-Stahl mit einer Drahtstärke von 0,12 mm und einer Maschenweite von 0,2 mm verwendet. Drahtstärke und Maschenweite bestimmen die Stabilität des Netzes und die für den Umsatz der Stoffe wirksame Netzstruktur. Im Ausführungsbeispiel wurden zwei Metalldrahtnetze beidseitig in einem Kunststoffrahmen 6 verspannt. Die Metalldrahtnetze waren mit einer Katalysatorschicht 4 in einer Stärke von maximal 8 mm beschichtet. Die mittels eines Absperrhahnes 7 an einem in der Zeichnung nicht wiedergegebenen Vorratsbehälter für Reaktionsgas anschließbare Zuleitung 3 mündet am Kunststoffrahmen 6.

Ausführungsbeispiel 1

Aus einer in den Behälter 1 eingefüllten Kupfersulfatlösung mit einem Gehalt von 2000 mg Cu je Liter Lösung wurde mittels Wasserstoffs Kupfer abgeschieden. Als Katalysator diente Platin, das in einer Katalysatorschicht enthalten war, die aus einer Mischung von ca. 10 mg Aktivkohle, 5 mg Polytetrafluorethylen, 1 mg Bindemittel (z. B. Kautschuk) und 1 mg Platin je $cm^2$ der Lösung zugewandte geometrische Katalysatorschichtoberfläche hergestellt wurde. Durch Begasen mit Wasserstoff wurde das Kupfer aus der Lösung bis zu einem Restgehalt von ca. 1 mg Cu je Liter aus der Lösung entfernt. Danach wurde das Kupfer durch Einblasen von Luft anstelle von Wasserstoff wieder in Lösung gebracht. Dieser Zyklus wurde mehrfach wiederholt. Die pro Zyklus bearbeitete Lösungsmenge betrug 7 ml je $cm^2$ geometrische Katalysatoroberfläche.

In einer Versuchsreihe diente als Trägerkörper für die Katalysatorschicht eine 20 mm dicke Platte aus porösem Graphit mit Abmessungen von 60 × 60 mm. Zur Zuführung von Wasserstoff war ein Rohr in das Innere des Plattenkörpers getrieben worden.

Für eine Vergleichsversuchsreihe wurde statt des beschichteten Trägerkörpers aus Graphit ein in der Zeichnung dargestellter Kunststoffrahmen 6 mit beschichtetem Edelstahldrahtnetz in den Behälter eingesetzt. Der Kunststoffrahmen wies eine Abmessung von 100 mm × 100 mm × 8 mm auf.

Bei Verwendung von beschichteten Trägerkörpern aus porösem Graphit in der ersten Versuchsreihe bröckelte die Katalysatorschicht in Stücken ab, so daß die Vorrichtung etwa nach 50 Zyklen unbrauchbar war. Bei Verwendung von innen beschichteten Metalldrahtnetzen in der Vergleichs Versuchsreihe konnte auch nach mehr als 300 Zyklen keine Beschädigung der wirksamen Katalysatorschicht festgestellt werden. Dabei war die Abscheidegeschwindigkeit von Kupfer in der Vergleichsversuchsreihe durchweg größer und wurde auch im Laufe fortschreitender Zyklenzahl nur unwesentlich langsamer. Die Zeiten, die je Zyklus jeweils zur Abscheidung der Hälfte des gelösten Kupfers erforderlich waren, betrugen : in der ersten Versuchsreihe mit beschichtetem Trägerkörper aus Graphit beispielsweise im 2. Zyklus 31 Minuten, im 6. Zyklus 45 Minuten. Dagegen wurden in der zweiten Versuchsreihe mit beschichteten Metalldrahtnetzen noch im 25. Zyklus 16 Minuten und im 306. Zyklus 21 Minuten erreicht.

Das beschichtete Edelstahlnetz erwies sich darüberhinaus sowohl dann als beständig, wenn das abgeschiedene Metall durch Einblasen von Luft anstelle von Wasserstoff wieder aufgelöst wurde, als auch dann, wenn die Metallauflösung durch Elektrolyse erfolgte, wobei das Metalldrahtnetz und damit das abgeschiedene Metall als Anode geschaltet wurde.

Ausführungsbeispiel 2

Aus einer wässrigen Lösung von Silbernitrat mit einem Anfangsgehalt von 550 mg Ag pro Liter wurde in einer Vorrichtung mit Edelstahldrahtnetz wie im Ausführungsbeispiel 1 mittels Wasserstoffs Silber abgeschieden, wobei die Metallabscheidung auf dem Edelstahldrahtnetz erfolgte. Bei einer Lösungsmenge von 1125 ml je 100 $cm^2$ Netzoberfläche wurde innerhalb von 70 Minuten eine Abreicherung an Silber in der Lösung bis auf 0,6 mg Ag pro Liter erreicht.

Ausführungsbeispiel 3

Mittels einer Vorrichtung mit Edelstahldrahtnetz wie im Ausführungsbeispie 1 wurde eine wässrige Lösung von Natriumhydrogensulfit mit einem Anfangsgehalt von 10 g Natriumhydrogensulfit pro Liter mit Luft oxidiert. Die Lösungsmittelmenge pro 100 $cm^2$ Metalldrahtnetzoberfläche betrug 300 ml. Nach einer Stunde Begasungszeit war der Gehalt an Natriumhydrogensulfat auf 2,4 g pro Liter abgesunken.

Ausführungsbeispiel 4

Einer wässrigen Lösung von Kaliumchromat mit einem Anfangsgehalt von 1000 mg $CrO_3$ pro Liter wurde mittels einer Vorrichtung mit Edelstahldrahtnetz wie im Ausführungsbeispiel 1 Wasserstoff zur Reduktion des Kaliumchromats zu Chrom (III)-Salz zugeführt. Bei einer Lösungsmenge von 330 ml je 100 $cm^2$ Netzoberfläche sank der Gehalt an $CrO_3$ innerhalb von 90 Minuten auf 1/10, innerhalb von 128 Minuten auf 1/100 und innerhalb von insgesamt 135 Minuten auf 1/1000 des Anfangswertes.

Ausführungsbeispiel 5

Anstelle des in den vorstehenden Ausführungsbeispielen verwendeten Edelstahldrahtnetzes wurde als Schutzkörper eine aus Chrom-Metallpulver gesinterte poröse Platte von 1 mm Dicke verwendet, die ebenso wie das Metalldrahtnetz auf der von der Lösung abgewandten Seite mit einer Platin, Bindemittel und Polytetrafluorethylen enthaltenden Aktivkohleschicht belegt worden war. Die Ergebnisse bei Reduktion einer Kaliumchromatlösung waren mit denjenigen vergleichbar, die mit beschichteten Metalldrahtnetzen erhalten wurden.

Ausführungsbeispiel 6

Bei einer Arbeitsweise wie in Ausführungsbeispiel 1 wurde die Vorrichtung mit Edelstahldrahtnetz zur Beschleunigung des Umsatzes auf der Lösungsseite des Metalldrahtnetzes zusätzlich mit geknäultem Edelstahldraht (V2A) mit einer Drahtstärke von 0,5 mm Durchmesser in Berührung gebracht, wobei die benetzte Oberfläche des in die Lösung eingetauchten geknäulten Drahtes etwa fünfmal so groß war wie die geometrische Außenfläche des Metalldrahtnetzes. Die Abscheidung der Hälfte der in der Lösung anfänglich vorhandenen Kupfermenge (2000 mg Cu pro Liter) erforderte nur 10 Minuten, die Abreicherung auf eine Restkonzentration von 1 mg Cu pro Liter 42 Minuten (ohne den geknäulten Edelstahldraht betrugen die entsprechenden Reaktionszeiten ca. 15 bzw. 75 Minuten).

**Patentansprüche**

1. Vorrichtung zur Reduktion oder Oxydation von reduzierbaren oder oxidierbaren Stoffen in einer wässrigen Lösung mit einer gasförmige Reduktions- oder Oxidationsmittel in die Lösung einführenden Zuleitung, deren Mündung von einer feinporigen, einen elektrochemisch wirksamen Katalysator enthaltenden Katalysatorschicht abgeschlossen ist, die für das Reduktionsmittel oder das Oxidationsmittel, durchlässig ist, dadurch gekennzeichnet, daß die Katalysatorschicht (4) auf ihrer der Lösung zugewandten Seite mit einem Schutzkörper (5) aus elektrisch leitendem Material bedeckt ist, der sowohl für in die Lösung einströmendes Reaktionsgas als auch für die Lösung durchlässig ist und der mit der Katalysatorschicht in elektrisch leitendem Kontakt steht.

2. Vorrichtung nach Anspruch 1, dadurch gekennzeichnet, daß die Katalysatorschicht (4) mit einem Metalldrahtnetz (5) mit Drahtstärken im Bereich zwischen 0,02 und 0,5 mm, vorzugsweise zwischen 0,05 und 0,2 mm, und Maschenweiten im Bereich zwischen 0,01 und 1 mm, vorzugsweise zwischen 0,05 und 0,5 mm, bedeckt ist.

3. Vorrichtung nach Anspruch 2, dadurch gekennzeichnet, daß das Metalldrahtnetz aus Edelstahl besteht.

4. Vorrichtung nach Anspruch 1, dadurch gekennzeichnet, daß zur Abdeckung der Katalysatorschicht eine oder mehrere poröse Sintermetallplatten verwendet werden.

5. Vorrichtung nach einem der vorhergehenden Ansprüche, dadurch gekennzeichnet, daß die der Lösung zugewandte Fläche des Schutzkörpers (5) mit zumindest im Bereich des Schutzkörpers in der Lösung verteilten, elektrisch leitenden, oberflächenreichen Körpern in Berührung steht.

## Claims

1. Device for the reduction or oxidation of reducible or oxidizable substances in an aqueous solution with a feed line for introducing gaseous reducing or oxidizing agents into the solution the opening of which is closed by a fine-pored catalyst layer containing an electrochemically active catalyst which is permeable to the reducing agent or the oxidizing agent, characterized in that the catalyst layer (4) is covered on its side facing towards the solution with a protective body (5) made of electrically conductive material which is permeable both to the reaction gas flowing into the solution and to the solution and is in electrically conductive contact with the catalyst layer.

2. Device according to Claim 1, characterized in that the catalyst layer (4) is covered with a metal wire net (5) of wire thickness in the region between 0.02 and 0.5 mm, preferably between 0.05 and 0.2 mm and mesh width in the region between 0.01 and 1 mm, preferably between 0.05 and 0.5 mm.

3. Device according to Claim 2, characterized in that the metal wire net consists of stainless steel.

4. Device according to Claim 1, characterized in that one or more porous sintered metal plates are used to cover the catalyst layer.

5. Device according to one of the preceding Claims, characterized in that the surface of the protective body (5) facing towards the solution is in contact with electrically conductive bodies of large surface area which are distributed in the solution to be treated, at least in the region of the protective body.

## Revendications

1. Dispositif de réduction ou d'oxydation de substances réductrices ou oxydables en solution aqueuse, comprenant un conduit d'amenée d'un agent réducteur ou oxydant gazeux dans la solution, dont l'embouchure est fermée par une couche de catalyseur qui contient un catalyseur à pores fins, efficace du point de vue électrochimique et qui est perméable à l'agent réducteur ou à l'agent oxydant, caractérisé en ce que la couche de catalyseur (4) est recouverte du côté tourné vers la solution d'un corps protecteur (5) en un matériau conducteur de l'électricité qui est perméable, à la fois, au gaz de réaction pénétrant dans la solution et à la solution, et qui est en contact électriquement conducteur avec la couche de catalyseur.

2. Dispositif suivant la revendication 1, caractérisé en ce que la couche de catalyseur (4) est recouverte d'une toile en fil métallique (5) ayant une épaisseur de fil comprise entre 0,02 et 0,5 mm et, de préférence, entre 0,05 et 0,2 mm, et une ouverture de maille comprise entre 0,01 et 1 mm et, de préférence, entre 0,05 et 0,5 mm.

3. Dispositif suivant la revendication 2, caractérisé en ce que la toile en fil métallique est en acier fin.

4. Dispositif suivant la revendication 1, caractérisé en ce que, pour recouvrir la couche de catalyseur, on utilise une ou plusieurs plaques poreuses en métal fritté.

5. Dispositif suivant l'une des revendications précédentes, caractérisé en ce que la surface du corps protecteur (5), qui est tournée vers la solution, est en contact avec des pièces d'une grande surface, conductrices de l'électricité et réparties dans la solution au moins dans la région du corps protecteur.